# EUROPEAN PATENT APPLICATION

(11) **EP 4 550 874 A1**
(43) Date of publication of application: **07.05.2025**
(21) Application number: 23829730.3
(22) Date of filing: 11.05.2023
(51) Int. Cl.: H04W 28/02

(54) **CONTINUOUS DATA TRANSMISSION METHOD AND APPARATUS**

(30) Priority: 29.06.2022 CN 202210751765
(71) Applicant: ZTE CORPORATION, Shenzhen, Guangdong 518057 (CN)
(72) Inventor: CHEN, Wu, Shenzhen, Guangdong 518057 (CN)
(74) Representative: Carangelo, Pierluigi
(86) International application number: PCT/CN2023/093620
(87) International publication number: WO 2024/001544

(57) **Abstract**

The embodiments of the present invention provide a continuous data transmission method and apparatus. The method includes: a user plane anchor point receiving a switching request notification sent by a control plane anchor point, wherein the switching request notification is a notification of switching to a second communication network after a UE attached to a first communication network creates a dedicated bearer; the user plane anchor point deleting a forwarding action rule (FAR) of a default bearer and the dedicated bearer of a first interface connected to the first communication network, and establishing an FAR of a default bearer of a second interface connected to a second communication network; and the user plane anchor point associating a packet detection rule (PDR) of a default bearer and a dedicated bearer of a third interface with the FAR of the default bearer of the second interface, so as to forward downlink data of the dedicated bearer, that has been established for the UE, to the UE by means of the FAR of the default bearer of the second interface. The present invention solves the problem in the related art that data interruption occurs in a switching process of a dedicated bearer, affecting the user experience, thereby achieving the effect of ensuring the data continuity of dedicated bearer.

## Description

### Technical Field

The embodiments of the present invention relate to the field of communications, and in particular, to a continuous data transmission method and apparatus.

### Background

A user accesses an Evolved Packet System (EPS) or a 5GS system and establishes a dedicated bearer, and then the user switches to an access manner of Evolved Packet Data Gateway/Evolved Packet Core (ePDG/EPC)). Since there is no interface between ePDG and Mobility Management Entity (MME) or Access Management Function (AMF), a dedicated bearer cannot be established synchronously when switching to ePDG/EPC, and needs to be created reversely by means of a corresponding control plane anchor point. Before reverse creation is completed, the downlink data of the dedicated bearer cannot be forwarded to a User Equipment (UE), which causes data interruption and affects user experience.

### Summary

The embodiments of the present invention provide a continuous data transmission method and apparatus, so as to at least solve the problem in the related art that data interruption occurs in a switching process of a dedicated bearer, which affects user experience.

According to an embodiment of the present invention, provided is a continuous data transmission method, including: a user plane anchor point receiving a switching request notification sent by a control plane anchor point, wherein the switching request notification is a notification of switching to a second communication network after a UE attached to a first communication network creates a dedicated bearer; the user plane anchor point deleting a forwarding action rule (FAR) of a default bearer and the dedicated bearer of a first interface connected to the first communication network, and establishing an FAR of a default bearer of a second interface connected to the second communication network; and the user plane anchor point associating a packet detection rule (PDR) of a default bearer and a dedicated bearer of a third interface with the FAR of the default bearer of the second interface, so as to forward downlink data of the dedicated bearer, that has been established for the UE, to the UE by means of the FAR of the default bearer of the second interface.

According to another embodiment of the present invention, provided is a continuous data transmission apparatus, including: a user plane first receiving module, configured to receive a switching request notification sent by a control plane anchor point, wherein the switching request notification is a notification of switching to a second communication network after a user equipment (UE) attached to a first communication network creates a dedicated bearer; a conversion module, configured to delete a forwarding action rule (FAR) of a default bearer and the dedicated bearer of a first interface connected to the first communication network, and establishing an FAR of a default bearer of a second interface connected to the second communication network; and a first association module, configured to associate a packet detection rule (PDR) of a default bearer and a dedicated bearer of a third interface with the FAR of the default bearer of the second interface, so as to forward downlink data of the dedicated bearer, that has been established for the UE, to the UE by means of the FAR of the default bearer of the second interface.

According to another embodiment of the present invention, further provided is a computer readable storage medium storing a computer program, wherein the computer program is configured to execute, when running, the steps in any one of the described method embodiments.

According to another embodiment of the present invention, further provided is an electronic device, including a memory and a processor, wherein the memory stores a computer program, and the processor is configured to run the computer program to execute the steps in any one of the method embodiments.

### Brief Description of the Drawings

Fig. 1 is a hardware structure block diagram of a mobile terminal of a continuous data transmission method according to an embodiment of the present invention;
Fig. 2 is a structure diagram of an operating network architecture of a continuous data transmission method according to an embodiment of the present invention;
Fig. 3 is a flowchart of a continuous data transmission method according to an embodiment of the present invention;
Fig. 4 is a flowchart of a continuous data transmission method according to an embodiment of the present invention;
Fig. 5 is a flowchart of a continuous data transmission method according to an embodiment of the present invention;
Fig. 6 is a flowchart of a continuous data transmission method according to an embodiment of the present invention;
Fig. 7 is a structure diagram of a continuous data transmission apparatus according to an embodiment of the present invention;
Fig. 8 is a structure diagram of a continuous data transmission apparatus according to an embodiment of the present invention;
Fig. 9 is a structure diagram of a continuous data transmission apparatus according to an embodiment of the present invention;
Fig. 10 is a structure diagram of a continuous data transmission apparatus according to an embodiment of the present invention;
Fig. 11 is a schematic diagram illustrating the principle of the dedicated bearer of an EPS or 5GS user switching to ePDG/EPC according to an embodiment of the present invention;
Fig. 12 is a schematic diagram illustrating the principle of a continuous data transmission method according to an embodiment of the present invention;
Fig. 13 is a schematic diagram illustrating the principle of a continuous data transmission method according to an embodiment of the present invention;
Fig. 14 is a schematic diagram illustrating the principle of a continuous data transmission method according to an embodiment of the present invention.

### Detailed Description of the Embodiments

The embodiments of the present invention are described in detail with reference to the accompanying drawings and in conjunction with the embodiments.

It should be noted that the terms "first", "second" etc., in the description, claims, and accompanying drawings of the embodiments of the present invention are used to distinguish similar objects, and are not necessarily used to describe a specific sequence or order.

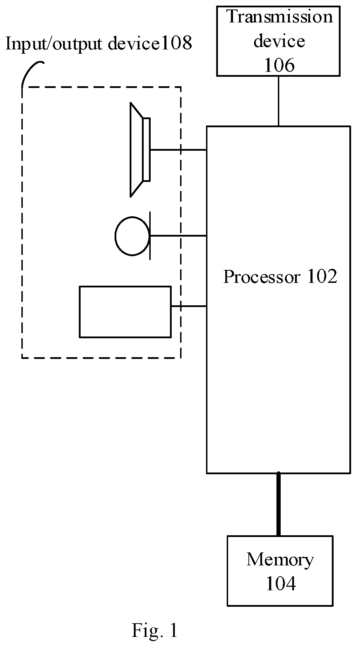

The method embodiment provided in the embodiment of the present invention may be executed in a mobile terminal, a computer terminal, or a similar computing device. Taking the mobile terminal running as an example, Fig. 1 is a hardware structure block diagram of a mobile terminal of a continuous data transmission method according to an embodiment of the present invention. As shown in Fig. 1, the mobile terminal may include one or more (only one is shown in Fig. 1) processors 102 (the processors 102 may include, but are not limited to, a microprocessor MCU or a processing device such as a programmable logic device FPGA) and a memory 104 configured to store data, wherein the mobile terminal can further include a transmission device 106 for a communication function and an input/output device 108. Those ordinarily skilled in the art can appreciate that the structure shown in Fig. 1 is for illustrative purposes only, but not limit the structure of the mobile terminal. For example, the mobile terminal may also include more or fewer components than that shown in Fig. 1, or have a different configuration than that shown in Fig. 1.

The memory 104 may be configured to store a computer program, for example, a software program and a module of application software, such as a computer program corresponding to the continuous data transmission method in the embodiment of the present invention. The processor 102 runs the computer program stored in the memory 104, so as to execute various function applications and data processing, that is, to implement the foregoing method. The memory 104 may include a high-speed random access memory, and may also include a non-transitory memory, such as one or more magnetic storage apparatuses, flash memories, or other non-transitory solid-state memories. In some instances, the memory 104 may further include memories remotely arranged with respect to the processor 102, and these remote memories may be connected to the mobile terminal over a network. Examples of the described network include, but are not limited to the Internet, an intranet, a local area network, a mobile communication network, and a combination thereof.

The transmission device 106 is configured to receive or transmit data by a network. Specific examples of the described network may include a wireless network provided by a communication provider of the mobile terminal. In an example, the transmission device 106 may include a network interface controller (NIC) that may be coupled to other network devices by a base station, so as to communicate with the Internet. In an example, the transmission device 106 can be a radio frequency (RF) module for communicating wirelessly with the Internet.

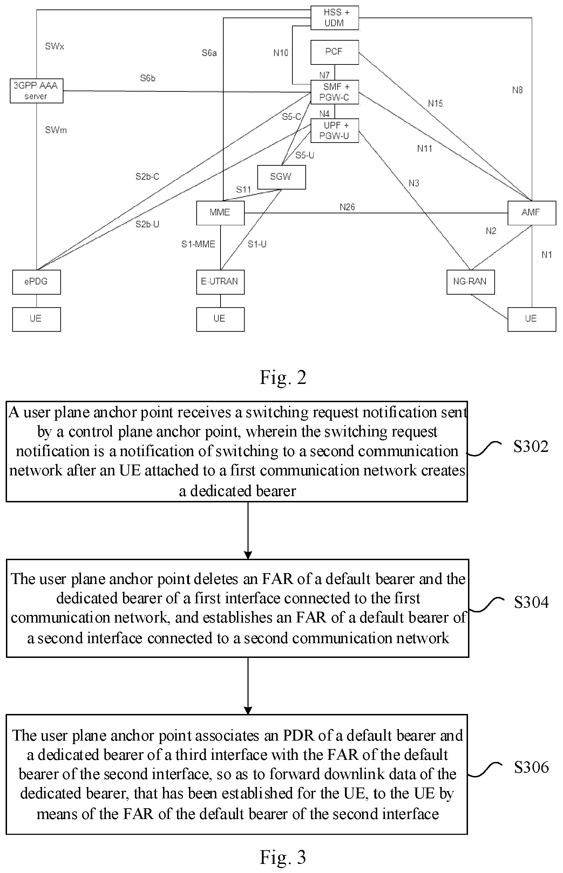

The embodiment of the present invention can run on the network architecture shown in Fig. 2, and as shown in Fig. 2, the network architecture includes: user equipment (UE), access management function (AMF), session management function (SMF), and user plane function (UPF), unified data management (UDM), policy control function (PCF), mobility management entity (MME), packet data network gateway (P-GW), service gateway (S-GW), evolved packet data gateway (ePDG), 3GPP AAA server, etc. The UE accesses the EPS or the 5GS system and establishes a dedicated bearer, and then the user switches to the ePDG/EPC. Since there is no interface between the ePDG and the MME/AMF, a dedicated bearer cannot be established synchronously when switching to the ePDG/EPC, and needs to be established reversely by means of the PGW-C/SMF, and the downlink data of the dedicated bearer can only normally reach the UE after the ePDG replies a Create Bearer Response (CBR) and the updated data packet detection rule (PDR) of a Gi interface of the dedicated bearer is associated with the forwarding action rule (FAR) of the dedicated bearer.

Provided in the present embodiment is a continuous data transmission method, which can run on the mobile terminal or network architecture. Fig. 3 is a flowchart of a continuous data transmission method according to an embodiment of the present invention. As shown in Fig. 3, the flow includes the following steps:
At S302: a user plane anchor point receives a switching request notification sent by a control plane anchor point, wherein the switching request notification is a notification of switching to a second communication network after a user equipment (UE) attached to a first communication network creates a dedicated bearer;
At S304: the user plane anchor point deletes a forwarding action rule (FAR) of a default bearer and the dedicated bearer of a first interface connected to the first communication network, and establishes an FAR of a default bearer of a second interface connected to a second communication network; and
At S306: the user plane anchor point associates a packet detection rule (PDR) of a default bearer and a dedicated bearer of a third interface with the FAR of the default bearer of the second interface, so as to forward downlink data of the dedicated bearer, that has been established for the UE, to the UE by means of the FAR of the default bearer of the second interface.

According to the embodiments, a user plane anchor point receives a switching request notification sent by a control plane anchor point, wherein the switching request notification is a notification of switching to a second communication network after a UE attached to a first communication network creates a dedicated bearer; the user plane anchor point deletes a forwarding action rule (FAR) of a default bearer and the dedicated bearer of a first interface connected to the first communication network, and establishes an FAR of a default bearer of a second interface connected to a second communication network; and the user plane anchor point associates a packet detection rule (PDR) of a default bearer and a dedicated bearer of a third interface with the FAR of the default bearer of the second interface, so as to forward downlink data of the dedicated bearer, that has been established for the UE, to the UE by means of the FAR of the default bearer of the second interface, and therefore the problem in the related art that data interruption occurs in a switching process of a dedicated bearer, affecting the user experience is solved, thereby achieving the effect of ensuring the data continuity of dedicated bearer.

An execution subject of the described steps may be a base station, but is not limited thereto.

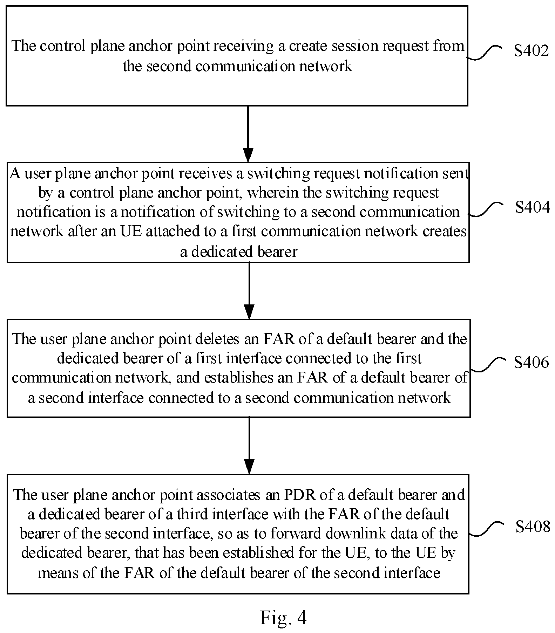

In an embodiment, before a user plane anchor point receives a switching request notification sent by a control plane anchor point, the method further includes: the control plane anchor point receives a create session request from the second communication network. Fig. 4 is a flowchart of a continuous data transmission method according to an embodiment of the present invention. As shown in Fig. 4, the method includes the following steps:
At S402: the control plane anchor point receives a create session request from the second communication network;
At p S404: a user plane anchor point receives a switching request notification sent by a control plane anchor point, wherein the switching request notification is a notification of switching to a second communication network after a user equipment (UE) attached to a first communication network creates a dedicated bearer;
At S406: the user plane anchor point deletes an FAR of a default bearer and the dedicated bearer of a first interface connected to the first communication network, and establishes an FAR of a default bearer of a second interface connected to a second communication network;
At S408: the user plane anchor point associates a PDR for a default bearer and a dedicated bearer of a third interface with the FAR of the default bearer of the second interface, so as to forward downlink data of the dedicated bearer, that has been established for the UE, to the UE by means of the FAR of the default bearer of the second interface.

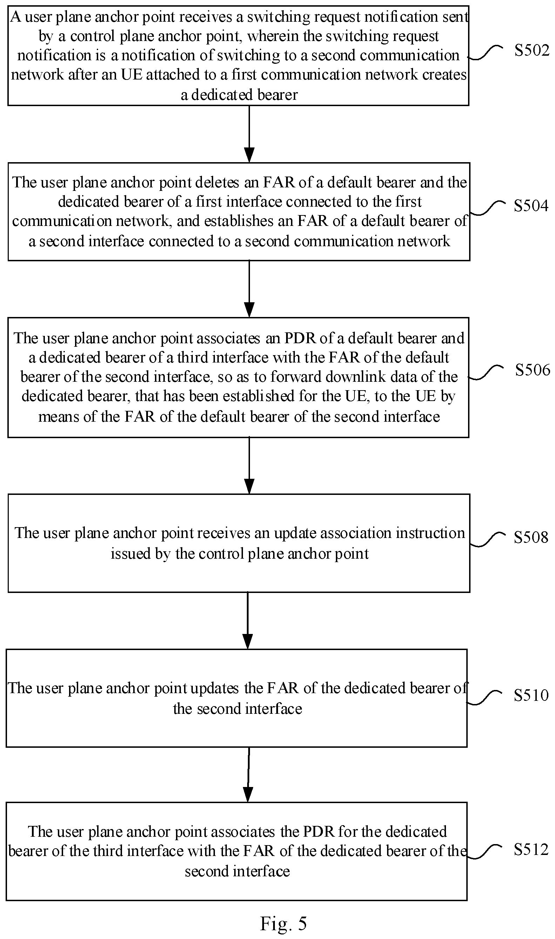

In an embodiment, after the user plane anchor point associates a PDR for a default bearer and a dedicated bearer of a third interface with the FAR of the default bearer of the second interface, the method further includes: the user plane anchor point receives an update association instruction issued by the control plane anchor point; the user plane anchor point updating the FAR of the dedicated bearer of the second interface; and the user plane anchor point associates the PDR for the dedicated bearer of the third interface with the FAR of the dedicated bearer of the second interface. Fig. 5 is a flowchart of a continuous data transmission method according to an embodiment of the present invention. As shown in Fig. 5, the method includes the following steps:
At S502: a user plane anchor point receives a switching request notification sent by a control plane anchor point, wherein the switching request notification is a notification of switching to a second communication network after a user equipment (UE) attached to a first communication network creates a dedicated bearer;
At S504: the user plane anchor point deletes an FAR of a default bearer and the dedicated bearer of a first interface connected to the first communication network, and establishing an FAR of a default bearer of a second interface connected to a second communication network;
At S506: the user plane anchor point associates a PDR for a default bearer and a dedicated bearer of a third interface with the FAR of the default bearer of the second interface, so as to forward downlink data of the dedicated bearer, that has been established for the UE, to the UE by means of the FAR of the default bearer of the second interface;
At S508: the user plane anchor point receives an update association instruction issued by the control plane anchor point;
At S510: the user plane anchor point updates the FAR of the dedicated bearer of the second interface; and
At S512: the user plane anchor point associates the PDR for the dedicated bearer of the third interface with the FAR of the dedicated bearer of the second interface.

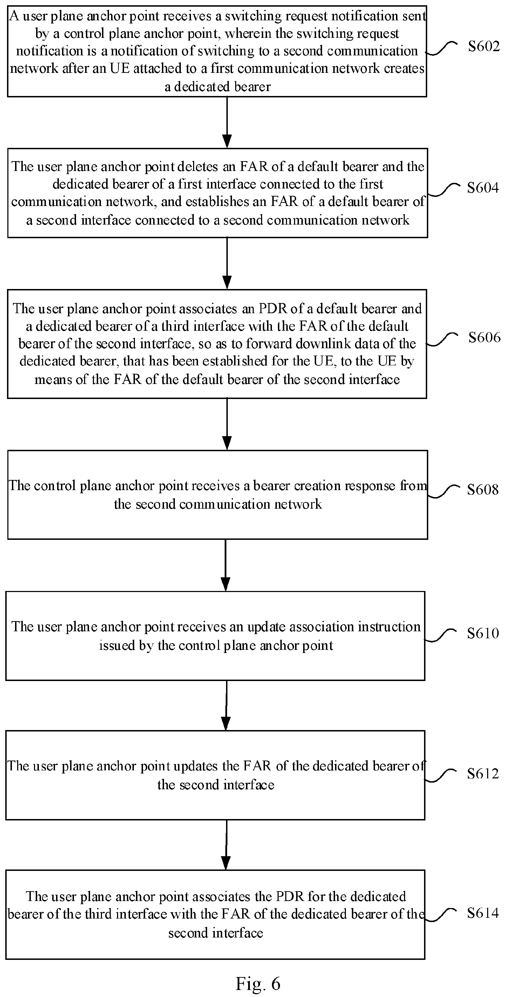

In an embodiment, before the user plane anchor point receives the update association instruction issued by the control plane anchor point, the method further includes: the control plane anchor point receives a create bearer response from the second communication network. Fig. 6 is a flowchart of a continuous data transmission method according to an embodiment of the present invention. As shown in Fig. 6, the method includes the following steps:
At S602: a user plane anchor point receives a switching request notification sent by a control plane anchor point, wherein the switching request notification is a notification of switching to a second communication network after a user equipment (UE) attached to a first communication network creates a dedicated bearer;
At S604: the user plane anchor point deletes an FAR of a default bearer and the dedicated bearer of a first interface connected to the first communication network, and establishing an FAR of a default bearer of a second interface connected to a second communication network;
At S606: the user plane anchor point associates a PDR for a default bearer and a dedicated bearer of a third interface with the FAR of the default bearer of the second interface, so as to forward downlink data of the dedicated bearer, that has been established for the UE, to the UE by means of the FAR of the default bearer of the second interface;
At S608: the control plane anchor point receives a bearer creation response from the second communication network;
At S610: the user plane anchor point receives an update association instruction issued by the control plane anchor point;
At S612: the user plane anchor point updates the FAR of the dedicated bearer of the second interface; and
At S614: the user plane anchor point associates the PDR for the dedicated bearer of the third interface with the FAR of the dedicated bearer of the second interface.

In an embodiment, the user plane anchor point includes at least one of the following: a user plane function (UPF); and a packet data network gateway user plane (PGW-U).

In an embodiment, the control plane anchor point includes at least one of the following: a session management function (SMF); and a packet data network gateway control plane (PGW-C).

In an embodiment, the deployment mode of the PGW-C includes at least one of the following: combined deployment and standalone deployment.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the embodiments of the present invention, or in other words, the part of the technical solutions making contributions to the prior art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present invention.

The present embodiment further provides a continuous data transmission apparatus, the apparatus is used for implementing the embodiments and preferred embodiments above, and what has been described will not be described repeatedly here. As used below, the term "module" may implement a combination of software and/or hardware of predetermined functions. Although the apparatus described in the following embodiments is preferably implemented in software, implementation in hardware or a combination of software and hardware is also possible and conceived.

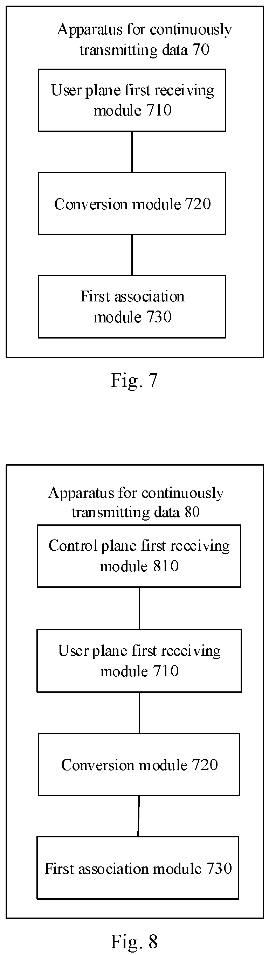

Fig. 7 is a structure diagram of a continuous data transmission apparatus according to an embodiment of the present invention. As shown in Fig. 7, the continuous data transmission apparatus 70 includes: a user plane first receiving module 710 configured to receive a switching request notification sent by a control plane anchor point, wherein the switching request notification is a notification of switching to a second communication network after a UE attached to a first communication network creates a dedicated bearer; a conversion module 720 configured to delete a FAR of a default bearer and the dedicated bearer of a first interface connected to the first communication network, and establishing an FAR of a default bearer of a second interface connected to a second communication network; and a first association module 730, configured to associate a PDR for a default bearer and a dedicated bearer of a third interface with the FAR of the default bearer of the second interface, so as to forward downlink data of the dedicated bearer, that has been established for the UE, to the UE by means of the FAR of the default bearer of the second interface.

In an embodiment, Fig. 8 is a structure diagram of a continuous data transmission apparatus according to an embodiment of the present invention. In addition to the modules shown in Fig. 8, the continuous data transmission apparatus 80 further includes a control plane first receiving module 810, configured to receive a session create request from a second communication network.

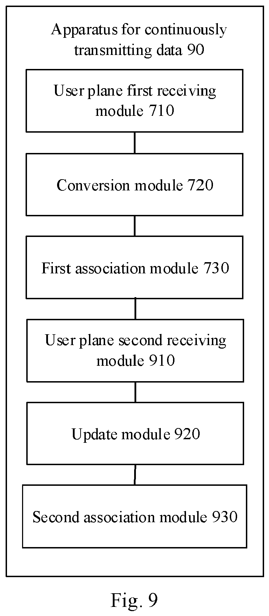

In an embodiment, Fig. 9 is a structure diagram of a continuous data transmission apparatus according to an embodiment of the present invention. As shown in Fig. 9, in addition to the modules shown in Fig. 7, the continuous data transmission apparatus 90 further includes: a user plane second receiving module 910, configured to receive an update association instruction issued by a control plane anchor point; an update module 920 configured to update the FAR of the dedicated bearer of the second interface; and a second association module 930 configured to associate the PDR of the dedicated bearer of the third interface with the FAR of the dedicated bearer of the second interface.

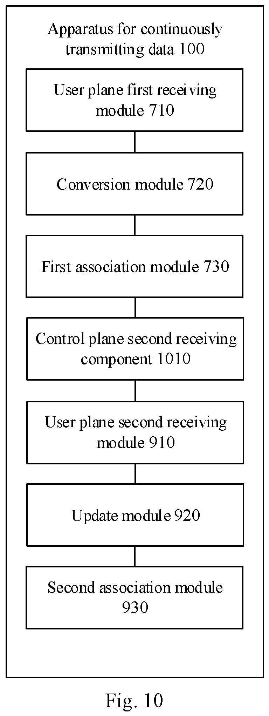

In an embodiment, Fig. 10 is a structure diagram of a continuous data transmission apparatus according to an embodiment of the present invention. As shown in Fig. 10, in addition to the modules shown in Fig. 9, the continuous data transmission apparatus 100 further includes: a control plane second receiving component 1010, configured to receive a bearer create response from the second communication network.

It should be noted that the modules above may be implemented by software or hardware, and the latter may be implemented in the following manner, but is not limited thereto: the modules are located in the same processor; or the modules are located in different processors in an arbitrary combination.

The embodiments of the present invention further provide a computer readable storage medium storing a computer program, wherein the computer program is configured to execute, when running, the steps in any one of the described method embodiments.

In an embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present invention further provide an electronic device, including a memory and a processor; the memory stores a computer program, and the processor is configured to run the computer program, so as to execute the operations in any one of the method embodiments.

In an embodiment, the electronic device can further include a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present invention can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Hence, the embodiments of the present invention are not limited to any specific combinations of hardware and software.

In order to make the technical solutions of the embodiments of the present invention better understood by those skilled in the art, the following describes the technical solutions with reference to specific scenario embodiments. The implementation solutions and accompanying drawings mentioned in the scenario embodiments are only used for reference and illustration and are not intended to limit the embodiments of the present invention. Likewise, the listed scenario embodiments are not all the embodiments of the present invention, are only preferred embodiments of the present invention, and are not intended to limit the scope of protection of the embodiments of the present invention.

### Scenario Embodiment 1

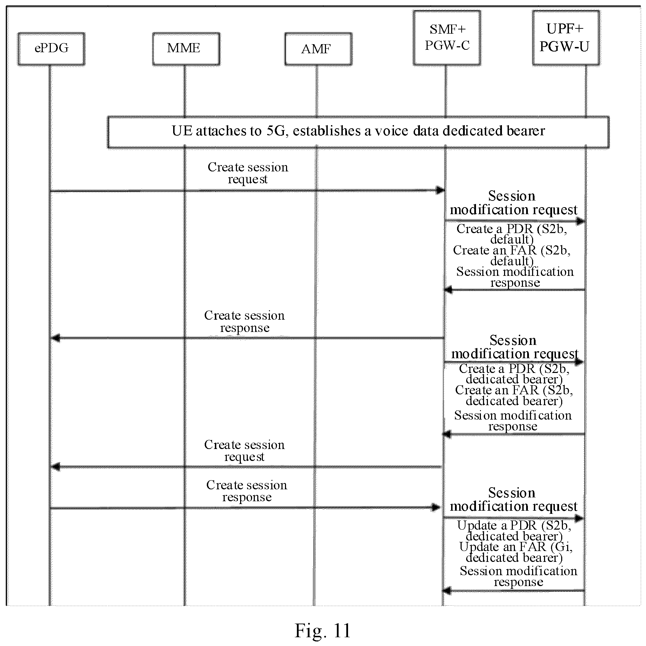

Fig. 11 is a schematic diagram illustrating the principle of the dedicated bearer of an EPS or 5GS user switching to ePDG/EPC according to an embodiment of the present invention. As shown in Fig. 11, the downlink data of the dedicated bearer of the user is interrupted during the switching process, and the downlink data of the dedicated bearer can normally reach the UE only after the ePDG replies with a create bearer response (CBR) and the PDR of the Gi interface is associated with the FAR of the dedicated bearer. Therefore, in the switching process, the data of the dedicated bearer may be interrupted obviously, which affects user experience.

The embodiments of the present invention provide a continuous data transmission method. A user accessing an EPS or a 5GS system creates a dedicated bearer and then switches to an ePDG/EPC to ensure data continuity.

After accessing the EPS or 5GS system, the user establishes a dedicated bearer and then switches to the ePDG/EPC. The ePDG notifies a PGW-C (sending a create session request (CSR)) of switching, and the PGW-C will send a PFCP session modification request (SMR) to notify a packet data network gateway (PGW-U) of the UE to establish a PDR and an FAR of a S2b interface of a default bearer, and in this case, the PDR of the Gi interface of the dedicated bearer is associated with the newly established FAR of the S2b interface of the default bearer by the Update PDR, so that the dedicated bearer can send downlink data from the PDN to the UE by means of the default bearer. The PGW-C receives the create bearer response from the ePDG in the phase of reversely establishing a dedicated bearer, the PGW-C carries an Update PDR in a PFCP session modification request message to re-associate the PDR of the Gi interface of the dedicated bearer with the FAR of the S2b interface of the dedicated bearer, and in this case, the data of the dedicated bearer can reach the UE normally by means of a tunnel of the dedicated bearer. In this way, the problem of interruption of data of the dedicated bearer during the process of switching an EPS/5GS system carrying a dedicated bearer to an ePDG/EPC can be well solved, thereby ensuring the data continuity of the dedicated bearer and improving the user experience.

### Scenario Embodiment 2

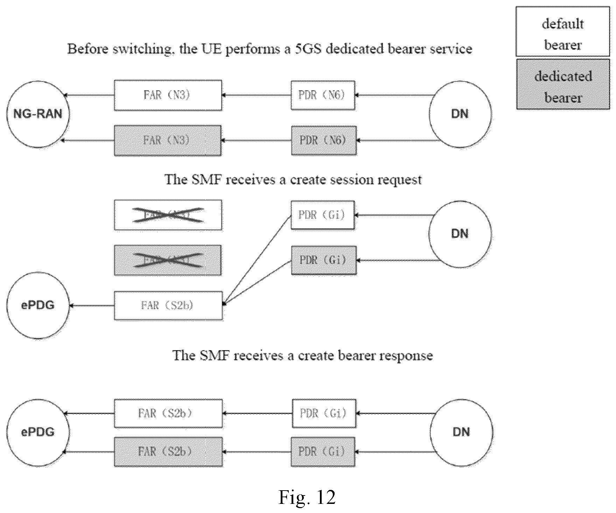

Fig. 12 is a schematic diagram illustrating the principle of a continuous data transmission method according to an embodiment of the present invention. As shown in Fig. 12, in the present scenario embodiment, when an SMF is switched from a 5GS to an ePDG/EPC, a change process of an association relationship between a PDR and a FAR of the downlink data includes the following steps:
At S1202: the UE attaches to the 5GS, establishes a 5GS dedicated bearer, and performs a data service of the dedicated bearer;
At S1204: the SMF receives a switching request message of the ePDG, i.e. a create session request; the SMF notifies a user plane function (UPF); the UPF deletes the original FAR of the N3 interface by means of an action of removing a Remove FAR; the FAR of the default bearer of the S2b interface is established by establishing a Create FAR; an Update PDR is updated; the PDR of the default bearer and the Gi interface of the dedicated bearer is associated with the FAR of the default bearer of the S2b interface;
At S1206: the SMF receives a dedicated bearer establishment response message of the ePDG, i.e. a create bearer response; the SMF notifies the UPF; the UPF updates the FAR of the S2b interface of the dedicated bearer by means of an Update FAR action; and the PDR of the Gi interface of the dedicated bearer is associated with the FAR of the S2b interface of the dedicated bearer by means of the Update PDR.

### Scenario Embodiment 3

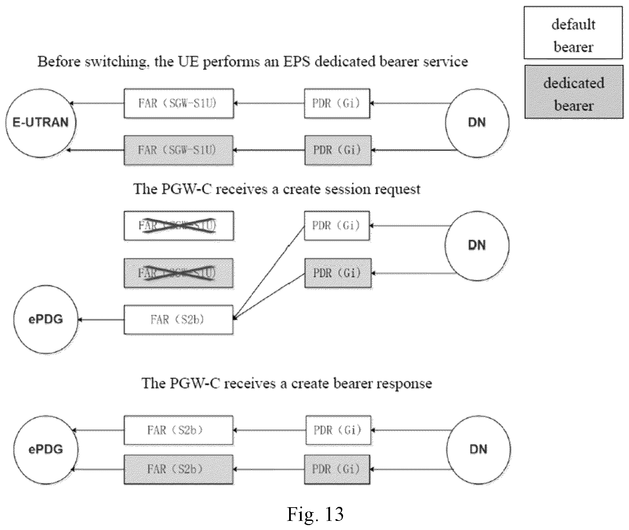

Fig. 13 is a schematic diagram illustrating the principle of a continuous data transmission method according to an embodiment of the present invention. As shown in Fig. 13, in the present scenario embodiment, when the PGW in combined deployment is switched from a EPS to an ePDG/EPC, a change process of an association relationship between a PDR and a FAR of the downlink data includes the following steps:
At S1302: the UE is attached to an EPS system, the PGW-C is in combined deployment, the dedicated bearer of the EPS is established, and a data service of the dedicated bearer is performed;
At S1304: the PGW-C receives a switching request message of the ePDG, i.e. a create session request; the PGW-C notifies the PGW-U; the PGW-U deletes the FAR of an original SGW-S1U interface by means of an action of removing a Remove FAR; an FAR of a default bearer of an S2b interface is established by means of creating a Create FAR; the default bearer and the PDR of the Gi interface of the dedicated bearer are associated with the FAR of the default bearer of the S2b interface by updating the Update PDR;
At S1306: the PGW-C receives a dedicated bearer establishment response message of the ePDG, i.e. a create bearer response; the PGW-C notifies the PGW-U; the PGW-U updates the FAR of the S2b interface of the dedicated bearer by updating the Update FAR; and the PDR of the Gi interface of the dedicated bearer is associated with the FAR of the S2b interface of the dedicated bearer by updating the Update PDR.

### Scenario Embodiment 4

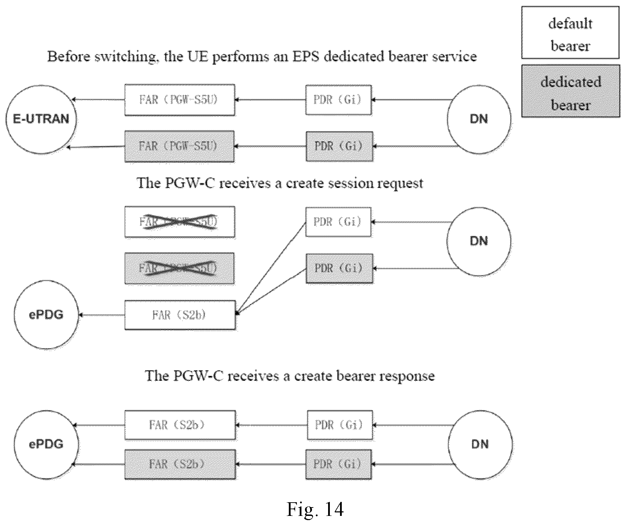

Fig. 14 is a schematic diagram illustrating the principle of a continuous data transmission method according to an embodiment of the present invention. As shown in Fig. 14, in the present scenario embodiment, when the PGW in standalone deployment is switched from a EPS to an ePDG/EPC, a change process of an association relationship between a PDR and a FAR of the downlink data includes the following steps:
At S1402: the UE is attached to 4G, the PGW-C is in standalone deployment, an EPS dedicated bearer is established, and a data service of the dedicated bearer is performed;
At S1404: the PGW-C receives a switching request message of the ePDG, i.e. a create session request; the PGW-C notifies the PGW-U; the PGW-U deletes the FAR of an original SGW-S1U interface by means of an action of removing a Remove FAR; an FAR of a default bearer of an S2b interface is established by means of creating a Create FAR; the default bearer and the PDR of the Gi interface of the dedicated bearer are associated with the FAR of the default bearer of the S2b interface by updating the Update PDR;
At S1406: the PGW-C receives a dedicated bearer establishment response message of the ePDG, i.e. a create bearer response; the PGW-C notifies the PGW-U; the PGW-U updates the FAR of the S2b interface of the dedicated bearer by updating the Update FAR; and the PGW-U associates the PDR of the Gi interface of the dedicated bearer with the FAR of the S2b interface of the dedicated bearer by updating the Update PDR.

In conclusion, according to the continuous data transmission method provided in the embodiments of the present invention, after establishing a voice data dedicated bearer, an EPS or a user attached to 5GS is switched to ePDG/EPC; and when a switching message create session request of the ePDG is received, a message between a PGW-C and a PGW-U associates the PDR of the Gi interface of the dedicated bearer with the FAR of the S2b interface of the default bearer by means of an Update PDR. When the create bearer response of the ePDG is received, the message between the PGW-C and the PGW-U re-associates the PDR of the Gi interface of the dedicated bearer with the FAR of the S2b interface of the dedicated bearer by means of the Update PDR.

Compared with the related art, in the embodiments of the present invention, a user attached to an EPS or a 5GS switches to an ePDG/EPC by using a PGW-C/SMF after creating a dedicated bearer, and by changing the association relationship between a PDR and an FAR of the dedicated bearer in the switching process, the downlink data of the dedicated bearer is forwarded to the user by means of the FAR of the default bearer, so that the downlink data of the dedicated bearer in the switching process is continuous, thereby ensuring data continuity and improving user experience.

The embodiments of the present invention are applicable to an in which an EPS or a 5GS is switched to or an ePDG/EPC; a PGW-C/SMF changes the association relationship between the PDR and the FAR by notifying a PGW-U, so that the data of the dedicated bearer in the switching process is continuous without interruption; and the PGW-C/SMF needs to enable and support an S2b access function. Specifically, the embodiments of the present invention support switching to voWifi by means of voLTE/voNR, thereby ensuring that a call is not interrupted during a switching process. The XR device accessing the 5GS system needs to be switched to the ePDG/EPC system, which can improve the data continuity during the switching process and ensure the low-delay experience of the user.

The above is only preferred embodiments of the embodiments of the present invention and is not intended to limit the embodiments of the present invention. Those skilled in the art may make various modifications and variations. Any modifications, equivalent replacements, improvements, etc. made within the principle of the embodiments of the present invention shall all fall within the scope of protection of the embodiments of the present invention.

## Claims

1. A continuous data transmission method, comprising:
receiving, by a user plane anchor point, a switching request notification sent by a control plane anchor point, wherein the switching request notification is a notification of switching to a second communication network after a user equipment, UE, attached to a first communication network creates a dedicated bearer;
deleting, by the user plane anchor point, a forwarding action rule, FAR, of a default bearer and the dedicated bearer of a first interface connected to the first communication network, and establishing an FAR of a default bearer of a second interface connected to the second communication network; and
associating, by the user plane anchor point, a packet detection rule, PDR, of a default bearer and a dedicated bearer of a third interface with the FAR of the default bearer of the second interface, so as to forward downlink data of the dedicated bearer, that has been established for the UE, to the UE by means of the FAR of the default bearer of the second interface.

2. The method according to claim 1, wherein before receiving, by a user plane anchor point, a switching request notification sent by a control plane anchor point, the method further comprises:
receiving, by the control plane anchor point, a session create request from the second communication network.

3. The method according to claim 1, wherein after associating, by the user plane anchor point , the PDR of the default bearer and the PDR of the dedicated bearer of the third interface with the FAR of the default bearer of the second interface, the method further comprises:
receiving, by the user plane anchor point, an update association instruction issued by the control plane anchor point;
updating, by the user plane anchor point, the FAR of the dedicated bearer of the second interface; and
associating, by the user plane anchor point, the PDR of the dedicated bearer of the third interface with the FAR of the dedicated bearer of the second interface.

4. The method according to claim 3, wherein before receiving, by the user plane anchor point , the update association instruction issued by the control plane anchor point, the method further comprises:
receiving, by the control plane anchor point, a create bearer response from the second communication network.

5. The method according to claim 1, wherein the user plane anchor point comprises at least one of the following:
a user plane function, UPF; and
a packet data network gateway user plane, PGW-U.

6. The method according to claim 1, wherein the control plane anchor point comprises at least one of the following:
a session management function, SMF; and
a packet data network gateway control plane, PGW-C.

7. The method according to claim 6, wherein the deployment manner of the PGW-C comprises at least one of the following:
combined deployment; and
standalone deployment.

8. A continuous data transmission apparatus, comprising:
a user plane first receiving module, configured to receive a switching request notification sent by a control plane anchor point, wherein the switching request notification is a notification of switching to a second communication network after a user equipment, UE, attached to a first communication network creates a dedicated bearer;
a conversion module, configured to delete a forwarding action rule, FAR, of a default bearer and the dedicated bearer of a first interface connected to the first communication network, and establishing an FAR of a default bearer of a second interface connected to the second communication network; and
a first association module, configured to associate a packet detection rule, PDR, of a default bearer and a dedicated bearer of a third interface with the FAR of the default bearer of the second interface, so as to forward downlink data of the dedicated bearer, that has been established for the UE, to the UE by means of the FAR of the default bearer of the second interface.

9. The apparatus according to claim 8, further comprising:
a control plane first receiving module, configured to receive a create session request from the second communication network.

10. The apparatus according to claim 8, further comprising:
a user plane second receiving module, configured to receive an update association instruction issued by the control plane anchor point;
an update module, configured to update the FAR of the dedicated bearer of the second interface; and
a second association component, configured to associate the PDR of the dedicated bearer of the third interface with the FAR of the dedicated bearer of the second interface.

11. The apparatus according to claim 10, further comprising:
a control plane second receiving module, configured to receive a bearer create response from the second communications network.

12. A computer readable storage medium, storing a computer program, wherein the computer program executed by a processor to implement the method according to any one of claims 1 to 7 when being.

13. An electronic device, comprising a memory, a processor, and a computer program stored in the memory and run on the processor, wherein when the processor executes the computer program to implement the method according to any one of claims 1 to 7.
